# EUROPÄISCHE PATENTANMELDUNG

(11) **EP 1 630 060 A1**
(43) Veröffentlichungstag der Anmeldung: **01.03.2006**
(21) Anmeldenummer: 05107767.5
(22) Anmeldetag: 24.08.2005
(51) Int. Cl.: B61L 27/00

(54) **Verfahren zur Datenübertragung zwischen mobilen und ortsfesten Teilnehmern**

(30) Priorität: 30.08.2004 DE 102004042311
(71) Anmelder: SIEMENS AKTIENGESELLSCHAFT, 80333 München (DE)
(72) Erfinder: Hofestädt, Holm, 38173, Sickte (DE); Kendelbacher, Detlef, 13129, Berlin (DE); Stein, Fabrice, 12621, Berlin (DE)

(57) **Zusammenfassung**

Die Erfindung betrifft ein Verfahren zur Datenübertragung zwischen mobilen und ortsfesten Teilnehmern, insbesondere zwischen Schienenfahrzeugen und Streckenzentralen. Um das Datenübertragungsvolumen zu minimieren und die vorhandene Übertragungskapazität für Nutzdaten optimal auszunutzen, ist vorgesehen, dass mittels hierarchisch strukturierten Übertragungsprotokollschichten (Cell-Link-Layer, Cell-Net-Layer und PP-Link-Layer), die in angepasster Ausprägung bei den mobilen und den ortsfesten Teilnehmern eingesetzt werden, sowie einem wählbaren, zellulär aufgebauten und verbindungslosen Kommunikationssystem zur mobilen Datenübertragung, kontinuierliche, verbindungsorientierte und bidirektionale Datenübertragungsdienste zwischen beliebigen mobilen und ortsfesten Teilnehmern innerhalb von Kommunikationsabschnitten oder Zellen und über Zellgrenzen hinweg bereitgestellt werden.

## Beschreibung

Die Erfindung betrifft ein Verfahren zur Datenübertragung zwischen mobilen und ortsfesten Teilnehmern, insbesondere zwischen Schienenfahrzeugen und Streckenzentralen.

In der Eisenbahnsicherungstechnik sind verschiedene Technologien zur Steuerung von Zugfahrten bekannt. Weit verbreitet sind Verfahren zur Einteilung der Gleisanlage in ortsfeste Blockabschnitte, die von Stellwerken verwaltet werden und einer Zugfahrt abschnittsweise zugeteilt werden können. In Abhängigkeit der Belegung dieser Blockabschnitte können Fahrwege gebildet und aufgelöst werden. Das Sicherungsverfahren sorgt dabei dafür, dass Gegenfahrten vermieden und Folgefahrten durch ein Signal und den zugehörigen Bremsweg räumlich getrennt sind.

Ein effizientes Mittel zur Verwaltung von Fahrwegen für Züge ist das moving block Verfahren. Hierbei werden Blockabschnitte gebildet, die nicht mehr ortsfest sind, sondern sich mit den Zügen bewegen. Zwei aufeinander folgende Züge werden nicht mehr durch ortsfeste Signale getrennt, sondern durch einen Abstand, der sich aus der jeweiligen Betriebssituation ergibt. Infolge dieses Verfahrens kann die Zugdichte wesentlich erhöht werden, was vor allem für den schienengebundenen Nahverkehr in Ballungsräumen von entscheidender Bedeutung hinsichtlich Aufwand, Transportkapazität und Wirtschaftlichkeit ist.

Das moving block Verfahren stellt wesentlich höhere Anforderungen an die Steuerung des Zugbetriebes als konventionelle Blocksysteme. Es setze eine automatische Zugbeeinflussungsanlage voraus, die laufend den Betriebszustand der Strecke und den Aufenthaltsort der Züge erfasst und daraus die sicherheitsrelevanten Vorgaben für die einzelnen Züge ableitet. Jeder auf der Strecke verkehrende Zug muss im Regelbetrieb mit der Technik für das moving block Verfahren ausgerüstet sein und kontinuierlich mit aktuellen Daten über den vorausliegenden Gleisabschnitt versorgt werden. Neben den Anforderungen an eine genaue Ortung des Zuges stellt das Verfahren auch hohe Anforderungen an die Datenübertragung zwischen Zügen und ortsfesten Steuerstellen.

Linienförmige Zugbeeinflussungssysteme (LZB) werden im schienengebundenen Nah- und Fernverkehr eingesetzt und sorgen für eine kontinuierliche automatische Sicherung und Steuerung von Zugfahrten. Kennzeichnend für diese Systeme sind ortsfeste abschnittweise aufgebaute Kommunikationssysteme, mit deren Hilfe Daten von ortsfesten Steuerzentralen zu den Fahrzeugen im zu steuernden Streckenbereich übertragen werden. Die physikalische Übertragung zwischen den ortsfesten Kommunikationsabschnitten und den Zügen kann nach verschiedenen Methoden erfolgen, beispielsweise induktiv über Linienleiterschleifen oder mittels Funk. Bei einigen Systemen können auch Daten von Zügen zurück an die Steuerzentrale übermittelt werden.

Bei der Datenübertragung in LZB-Systemen werden zyklische Verfahren zur Telegrammübertragung angewendet. Die Telegramme an die Züge werden in einem festgelegten synchronen Zeitregime übertragen. Die Rückübertragung von Telegrammen an die Streckenzentrale erfolgt ebenfalls synchron.

Die Adressierung eines Zuges erfolgt aufenthaltsbezogen über den jeweiligen Kommunikationsabschnitt, z. B. Linienleiterschleife, in der ein Zug sich zum Übertragungszeitpunkt aufhält. Damit ist zwangsläufig eine Verkopplung von Applikationsfunktion - Zugsicherung - und Kommunikationsfunktion - Datenübertragung - verbunden, weil die Steuerungsinformationen an die Züge direkt von der örtlichen Lage und Ausdehnung der Kommunikationsabschnitte abhängen und somit das Zugsicherungsverfahren kommunikationsabschnittsbezogen realisiert ist.

Die Anwendung des moving block Verfahren erfordert eine zugspezifische Steuerung, woraus sich die Anforderung einer zugspezifischen Adressierung ableitet.

Durch sehr feine Unterteilung der Kommunikationsabschnitte, z. B. Schleifen oder Funkzellen, kann auch mit ortsbezogener Adressierung ein moving block Verfahren angenähert werden.

Hier bestehen allerdings Grenzen durch steigenden Aufwand für Synchronisierung, Kommunikationsinfrastruktur und Ausfallsicherheit.

Im europäischen Standard für Zugsicherungssysteme European Train Control System (ETCS) wird für die kontinuierliche linienförmige Zugsteuerung/Zugsicherung ein zellulares Mobilfunknetz auf Basis des GSM-Standards als Übertragungsmedium vorgegeben. Dieses Mobilfunknetz stellt Vermittlungsfunktionen, verbindungsorientierte Datenkanäle und automatische Zellweiterschaltung - Handover - auf der Basis einer individuellen Teilnehmeradressierung bereit. Damit ist die Datenübertragung im GSM-Mobilfunknetz auch für moving block Anwendungen prinzipiell geeignet (ETCS Level 3).

Für die europäischen Bahnen ist die Anwendung des ETCS eine Voraussetzung für die Interoperabilität des Schienenverkehrs. Die Anforderung nach Harmonisierung der Sicherungssysteme besteht dabei vor allem im europäischen Fernverkehr. Für den lokalen Schienennahverkehr, z. B. U-Bahnen, bestehen dagegen oft keine Interoperabilitätsanforderungen.

Im Nahverkehr sind mit der Anwendung des GSM-Mobilfunks im moving block Betrieb eine Reihe von Nachteilen verbunden.

Die Investitionskosten für die GSM-Funkinfrastruktur sind erheblich. Es besteht das Problem der Zuteilung von Funkfrequenzen, bzw. bei Nutzung öffentlicher Frequenzen das Problem der ständigen Verfügbarkeit freier Kanäle für die Zugsteuerung. Die Anwendung von GSM in Tunnelsystemen ist technisch aufwändig. Schließlich ist auch das Zeitverhalten des GSM mit langen Verbindungsaufbauzeiten, hoher Übertragungsverzögerung und gelegentlichen Verbindungsabbrüchen für betrieblich anspruchsvolle Nahverkehrsanwendungen kritisch.

Der Erfindung liegt die Aufgabe zugrunde, einen kontinuierlichen verbindungsorientierten Datenübertragungsdienst zwischen mobilen und ortsfesten Teilnehmern anzugeben, wobei verschiedene Übertragungsverfahren mittels marktgängiger Übertragungskomponenten realistischer sein sollen.

Die Aufgabe wird durch die kennzeichnenden Merkmale des Anspruchs 1 gelöst. Durch die Einführung einer Übertragungsprotokollarchitektur zwischen dem zellulären Kommunikationssystem und den Applikationen in Fahrzeugen und in Streckenzentralen wird die knappe Ressource der Kanalkapazität für die mobile Datenübertragung bestmöglich genutzt. Die Übertragungsprotokollarchitektur enthält mehrere Protokollschichten, die hierarchisch angeordnet sind und an definierten Schnittstellen zusammenwirkten. In jeder Protokollschicht wirkt zu einem Zeitpunkt eine Instanz im Fahrzeug mit einer Instanz in der Streckenzentrale zusammen. Die Anzahl der kommunizierenden Fahrzeuge und Streckenzentralen ist dabei offen.

Mittels der Kommunikation über die Protokollschichten, im Folgenden MAC-Verfahren (Media Access Control-Verfahren) genannt, werden Fahrzeuge, die sich im Bereich des zellulären Kommunikationssystems befinden und bewegen, gezielt und fahrzeugindividuell mit Daten versorgt. Durch Bekanntgabe der Aufenthaltsorte von Zügen in benachbarten Kommunikationsabschnitten sorgt das MAC-Verfahren dafür, dass ein Fahrzeug auch beim Verlassen eines Kommunikationsabschnittes im benachbarten nächsten Kommunikationsabschnitt ohne Unterbrechung mit Daten versorgt wird - Zellwechsel. Neben der fahrzeugspezifischen Adressierung wird durch ein zusätzliches Aufrufverfahren die Aufnahme von Fahrzeugen in das Zugbeeinflussungssystem in jedem Kommunikationsabschnitt unterstützt. Weiterhin sorgt das MAC-Verfahren dafür, dass der Umfang der tatsächlich an die Züge gesendeten Daten in den einzelnen Kommunikationsabschnitten minimiert wird.

Zur nachfolgenden Beschreibung des Verfahrens werden folgende Begriffe verwendet:
- Kommunikationsinstanz
   Eine Kommunikationsinstanz ist die Applikation eines bestimmten Fahrzeuges oder einer bestimmten Streckenzentrale, die unter eindeutiger Adresse erreichbar ist und das MAC-Verfahren benutzt.
- Kommunikationssystem
   Für die Anwendung des MAC-Verfahrens ist die Verwendung eines unterlagerten Kommunikationssystems vorgesehen, mit dem Daten zwischen mobilen und ortsfesten Teilnehmern ausgetauscht werden können. Das physikalische Verfahren der Übertragung, z. B. induktive Übertragung mit Linienleitern, und der Aufbau der fahrzeug- und streckenseitigen Komponenten des Kommunikationssystems sind dabei variabel. Folgende Eigenschaften sind vom Kommunikationssystem gefordert:
   ■ Möglichkeit zum Aufbau von mehreren örtlich benachbarten Kommunikationsabschnitten,
   ■ Unterstützung der Kommunikation vom Mobilteilnehmer zum ortsfesten Teilnehmer und umgekehrt - duplex - in jedem Kommunikationsabschnitt,
   ■ Verbindungslose Kommunikation,
   ■ Unterstützung der Kommunikation im Kommunikationsabschnitt mit mehreren mobilen Teilnehmern - Point-to-Multipoint oder n * Point-to-Point,
   ■ transparenter Datentransport - Layer 1 und
   ■ ausreichende und skalierbare Servicequalität (QoS) für Zugsteuerungsanwendung.

   Nicht gefordert sind dagegen:
   ■ Fehlerkorrektur (ARQ),
   ■ Multilinkmechanismus, das heißt gleichzeitige Übertragung zu unterschiedlichen Teilnehmern auf dem Fahrzeug beziehungsweise an der Strecke,
   ■ Kollisionsbehandlung z. B. Sendekollisionserkennung bei Ethernet,
   ■ Teilnehmerverwaltung und
   ■ Weiterschaltung der Kommunikation zwischen Kommunikationsabschnitten - Handover.

   Für das Kommunikationssystem können sowohl synchrone, als auch asynchrone Kommunikationsmedien verwendet werden.
   Die Notwendigkeit einer kommunikationsabschnittsbezogenen Ansteuerung der Kommunikationsmittel des Kommunikationssystems, z. B. Frequenzumschaltung, stellt kein Hindernis der Anwendung des MAC-Verfahrens dar.
   Mögliche Kommunikationssysteme sind beispielsweise Tonfrequenzübertragungssysteme (FTGS), Linienleitersysteme, Powerlinesysteme (PLC) oder zelluläre Funksysteme.
- Kommunikationsabschnitt
   Das Kommunikationssystem, auf welchem das erfindungsgemäße Verfahren aufsetzt, ist streckenseitig aus einzelnen Kommunikationsabschnitten zusammengesetzt. In jedem Kommunikationsabschnitt können mehrere mobile Teilnehmer, insbesondere Fahrzeuge, mit ortsfesten Teilnehmern, insbesondere Streckenzentralen, verbindungslos kommunizieren. Das Kommunikationssystem unterstützt je Kommunikationsabschnitt die mobile kontinuierliche transparente bitweise Datenübertragung in beide Richtungen - Layer 1. Die Lage, Ausdehnung und technische Ausprägung der Kommunikationsabschnitte ist variabel. An der Grenze zwischen zwei Kommunikationsabschnitten kann eine Umstimmung, z. B. der Frequenz, notwendig sein, um die Kommunikation eines mobilen Teilnehmers im nächsten Kommunikationsabschnitt zu ermöglichen.
- Cell-Adaption-Layer
   Der Cell-Adapter-Layer dient der Ansteuerung und fahrzeugspezifischen Umschaltung von Kommunikationsabschnitten, so dass die transparente Datenübertragung zwischen dem ortsfesten Kommunikationsabschnitt und dem mobilen Fahrzeug - Layer 1 - möglich ist. Diese Protokollschicht ist optional und wird nur dann verwendet, wenn durch das MAC-Verfahren spezifische Anpassungen an das Kommunikationssystem, z. B. Umschaltung von Frequenzen, gesteuert werden müssen. Der Cell-Adapter-Layer übernimmt in diesem Fall eine Treiberfunktion vom MAC-Verfahren zum Kommunikationssystem. Streckenseitig kann jeder Kommunikationszelle ein Cell-Adaption-Layer zugeordnet sein. Fahrzeugseitig kann bei Bedarf ein Cell-Adaption-Layer verwendet werden.
- Cell-Link-Layer
   Der Cell-Link-Layer ist die unterste Protokollschicht des MAC-Verfahrens. Die Protokollschicht ist in unterschiedlicher Ausprägung jeweils im Fahrzeug und auf der Streckenseite vorhanden. Erforderliche Steuerungsinformationen zur Umschaltung zwischen Kommunikationsabschnitten werden durch die Cell-Link-Layer bereitgestellt. Wird die Umschaltung zwischen Kommunikationsabschnitten im Fahrzeug durchgeführt und sind dazu Informationen über die Eigenschaften benachbarter Kommunikationsabschnitte notwendig, können diese Informationen zwischen den Kommunizierenden Cell-Link-Layern von Fahrzeug und Kommunikationsabschnitt ausgetauscht werden.
   Ein streckenseitiger Cell-Link-Layer steuert entweder den Cell-Adaption-Layer, sofern dieser vorhanden ist, oder direkt einen Kommunikationsabschnitt des Kommunikationssystems an. Streckenseitig ist jedem Kommunikationsabschnitt genau ein Cell-Link-Layer zugeordnet. Durch den streckenseitigen Cell-Link-Layer erfolgt die asynchrone Datenübertragung und die Steuerung des Aufrufes der Fahrzeuge. Dazu verwaltet jeder streckenseitige Cell-Link-Layer eine Sendesequenz und eine Sendeaufforderungssequenz. Gesteuert durch die Sendesequenz erfolgt asynchron die Übertragung von Datagrammen an die potentiellen Kommunikationspartner, insbesondere Fahrzeuge. Die Sendeaufforderungssequenz gibt den Fahrzeugen die Möglichkeit, Datagramme an den streckenseitigen Cell-Link-Layer zu senden. Benachbarte streckenseitigen Cell-Link-Layer besitzen Schnittstellen, über die Cell-Link-Metric Informationen ausgetauscht werden.
   Je Fahrzeug gibt es einen CEll-Link-Layer. Der fahrzeugseitige Cell-Link-Layer empfängt Datagramme, die an das Fahrzeug adressiert sind. Weiterhin reagiert der fahrzeugseitige Cell-Link-Layer auf Sendeaufforderungen durch den streckenseitigen Cell-Link-Layer, indem er innerhalb eines zugewiesenen Zeitraumes eine Empfangsbestätigung - Quittung -, eine Anforderung zur Aufnahme in das Zugbeeinflussungssystem oder Nutzdaten an die Strecke sendet.
- Cell-Net-Layer
   Der Cell-Net-Layer ist die zweite Protokollschicht des MAC-Verfahrens, die in unterschiedlicher Ausprägung im Fahrzeug und auf der Streckenseite angeordnet ist.
   Der streckenseitige Cell-Net-Layer hat die Aufgabe, Datagramme zwischen Kommunikationsinstanzen zu routen. Er steuert eine projektierbare Anzahl von streckenseitigen Cell-Link-Layern. Auf der Streckenseite gibt es mehrere Cell-Net-Layer, in denen verschiedene Streckenzentralen und Fahrzeuge registriert werden können. Um Informationen zwischen Kommunikationsinstanzen routen zu können, verwaltet jeder streckenseitige Cell-Net-Layer eine Cell-Net-Metric. Über Schnittstellen zwischen benachbarten streckenseitigen Cell-Net-Layern werden Cell-Net-Metrik Informationen, sowie Nutzdaten und Steuerinformationen zwischen den Cell-Net-Layern übertragen. Ein streckenseitiger Cell-Net-Layer kann eine Schnittstelle zum übergeordneten PP-Link-Layer aufweisen. Über die Schnittstelle zum PP-Link-Layer werden Nutzdaten und Steuerbefehle übertragen.
   Fahrzeugseitig gibt es einen Cell-Net-Layer, der die Nutzdaten zwischen Cell-Link-Layer und PP-Link-Layer im Fahrzeug weiterleitet.
- PP-Link-Layer
   Der PP-Link-Layer ist die oberste Protokollschicht des MAC-Verfahrens und setzt auf die Dienste des Cell-Net-Layers auf. Er bietet nach oben eine Dienstschnittstelle zur Zugbeeinflussungsapplikation und nach unten eine Schnittstelle zu einem Cell-Net-Layer. Der PP-Link-Layer baut auf Anforderung der Applikation Nutzdatenkanale auf und ab. Er bietet der Applikation einen verbindungsorientierten und geschützten Ende-zu-Ende Datenubertragungsdienst mit definierter Obertragungsqualitat (QoS). Der PP-Link-Layer sichert die vollständige und fehlerfreie Datenübertragung durch Anwendung von Fehlerkorrekturverfahren (FEC und/oder ARQ) im Datenkanal. Weiterhin kann er durch Segmentierung auf Sendeseite und Reassemblierung auf Empfängerseite für die optimale Anpassung der Datagramme an die Eigenschaften des Kommunikationsmediums sorgen. Eine weitere wesentliche Aufgabe des PP-Link-Layers ist die streckenseitige Steuerung von Rücknahmeaufforderungen für bereits erfolgreich übertragene Datagramme - Flush-Funktion. Diese Funktion resultiert daraus, das Datagramme an Fahrzeuge in mehreren Cell-Net-Layern zum Senden bereitgestellt werden können. Im Gegensatz dazu wird ein Datagramm aber normalerweise nur einmal gesendet. Mit der Flush-Funktion veranlasst der PP-Link-Layer das Löschen der übrigen bereitgestellten Datagramme, nachdem die erfolgreiche Übertragung des Datagramms quittiert wurde. Dadurch wird eine Mehrfachübertragung von Datagrammen vermieden und die Kanalausnutzung verbessert.
- Registrierte Kommunikationsinstanz
   Eine registrierte Kommunikationsinstanz ist dadurch gekennzeichnet, dass sie in der MAC-Protokollarchitektur verwaltet wird. Es können sowohl Fahrzeuge, als auch Streckenzentralen registriert werden. Die Art der Registrierung einer Kommunikationsinstanz wird unterschieden nach eigenregistriert und fremdregistriert. Eigenregistrierte Kommunikationsinstanzen sind in einer Protokollschicht als direkt erreichbar gekennzeichnet. Fremdregistrierte Kommunikationsinstanzen sind in einer Protokollschicht als in der Nähe befindlich und damit als potentiell erreichbar gekennzeichnet. Der streckenseitige Registrierungszustand von Fahrzeugen ist ein dynamischer Prozess, der sich mit der Bewegung der Fahrzeuge durch die Kommunikationsabschnitte ändert.
- Link-Eigenregistrierung - own
   Die Link-Eigenregistrierung erfolgt für Fahrzeuge in den streckenseitigen Cell-Link-Layern. Ein link-eigenregistriertes Fahrzeug ist dadurch gekennzeichnet, dass es sich in einem Kommunikationsabschnitt befindet und mit dem zugehörigen streckenseitigen Cell-Link-Layer kommuniziert. Sobald ein streckenseitiger Kommunikationsabschnitt ein Datagramm von einem Fahrzeug empfängt, wird das Fahrzeug im zugehörigen Cell-Link-Layer als link-eigenregistriert verwaltet. Jedes link-eigenregistrierte Fahrzeug wird in der Sendesequenz und in der Sendeaufforderungssequenz des streckenseitigen Cell-Link-Layers berücksichtigt. Wenn von einem Fahrzeug innerhalb einer festgelegten Zeitdauer kein Datagramm mehr empfangen wird, wird im zugehörigen streckenseitigen Cell-Link-Layer die Link-Eigenregistrierung gelöscht.
- Link-Fremdregistrierung - other
   Die Link-Fremdregistrierung erfolgt für Fahrzeuge in den streckenseitigen Cell-Link-Layern. Sie wird durch die Cell-Link-Layer selbst auf der Basis der Cell-Link-Informationen an der Schnittstelle zu benachbarten Cell-Link-Layern veranlasst. Ein link-fremdregistriertes Fahrzeug ist dadurch gekennzeichnet, dass es sich in einem Kommunikationsabschnitt befindet, der sich in der Cell-Link-Umgebung des Kommunikationsabschnittes befindet, wo das Fahrzeug eigenregistriert ist. Die Ausdehnung der Cell-Link-Umgebung wird durch die Cell-Link-Metric bestimmt. Je nach Festlegung der Cell-Link-Metric gehören mehr oder weniger Cell-Link-Layer in der Umgebung einer link-eigenregistrierten Kommunikationsinstanz zur Cell-Link-Umgebung dieser Kommunikationsinstanz. Fremdregistrierte Fahrzeuge werden in der Sendeaufforderungssequenz aller zur Cell-Link-Umgebung gehörenden streckenseitigen Cell-Link-Layer berücksichtigt. Die link-Fremdregistrierung eines Fahrzeuges in einem Cell-Link-Layer wird gelöscht, wenn infolge der Weiterfahrt des Fahrzeuges der Cell-Link-Layer nicht mehr zur Cell-Link-Umgebung des Fahrzeuges gehört.
- Cell-Link-Umgebung
   Die Cell-Link-Umgebung ist fahrzeugspezifisch und besteht aus einer Anzahl von Kommunikationsabschnitten, die um den Kommunikationsabschnitt angeordnet sind, in dem ein Fahrzeug link-eigenregistriert ist. Sie bestimmt, in welchen Kommunikationsabschnitten ein Fahrzeug als link-fremdregistriert geführt wird. In seiner Cell-Link-Umgebung wird ein Fahrzeug in der Sendeaufforderungssequenz der streckenseitigen Cell-Link-Layer berücksichtigt. Die Cell-Link-Umgebung ändert sich mit der Bewegung des Fahrzeuges entlang der Kommunikationsabschnitte - Fahrzeugschatten Linkebene.
- Cell-Link-Metric
   Die Cell-Link-Metric definiert die Cell-Link-Umgebung eines registrierten Fahrzeuges. Sie wird in jedem streckenseitigen Cell-Link-Layer für jedes registrierte Fahrzeug bestimmt. Zur Ermittlung der Cell-Link-Metric werden Cell-Link-Metric Informationen zwischen benachbarten streckenseitigen Cell-Link-layern ausgetauscht. Die Cell-Link-Metric eines Fahrzeuges hat den höchsten Wert in dem Cell-Link-Layer, in dem das Fahrzeug link-eigenregistriert ist. Bei jeder Informationsweitergabe an den nächsten Cell-Link-Layer wird die Cell-Link-Metric dekrementiert, bis das festgelegte Limit erreicht ist.
   Dort endet die Cell-Link-Umgebung eines Fahrzeuges.
- Net-Eigenregistrierung - own
   Die Net-Eigenregistrierung erfolgt für Fahrzeuge und Streckenzentralen in Cell-Net-Layern. Die Net-Eigenregistrierung eines Fahrzeuges in einem streckenseitigen Cell-Net-Layer erfolgt, wenn ein zugeordneter Cell-Link-Layer die Link-Eigenregistrierung für ein Fahrzeug an den Cell-Net-Layer meldet - dynamisch. Die Net-Eigenregistrierung einer Streckenzentrale erfolgt durch Projektierung in einem streckenseitigen Cell-Net-Layer - statisch. Die Verwaltung eines net-eigenregistrierten Fahrzeuges im Cell-Net-Layer wird gelöscht, wenn das Fahrzeug in den zugehörigen Cell-Link-Layern nicht mehr link-eigenregistriert ist und eine diesbezügliche Information den Cell-Net-Layer erreicht.
- Net-Fremdregistrierung - other
   Die Net-Fremdregistrierung erfolgt für Fahrzeuge und Streckenzentralen in Cell-Net-Layern. Sie wird durch die Cell-Net-Layer selbst auf der Basis von Cell-Net-Metric-Informationen an der Schnittstelle zu benachbarten Cell-Net-Layern veranlasst. Fahrzeuge und Streckenzentralen werden in Cell-Net-Layern net-fremdregistriert, wenn sie sich in der Cell-Net-Umgebung von net-eigenregistrierten Fahrzeugen oder Streckenzentralen befinden. Die Ausdehnung der Cell-Net-Umgebung wird durch die Cell-Net-Metric bestimmt. Je nach Festlegung der Cell-Net-Metric gehören mehr oder weniger Cell-Net-Layer in der Umgebung einer net-eigenregistrierten Kommunikationsinstanz zur Cell-Net-Umgebung dieser Kommunikationsinstanz. Die Cell-Net-Umgebung von Streckenzentralen ist statisch, während die Cell-Net-Umgebung von Fahrzeugen sich mit der Bewegung des Fahrzeuges dynamisch verändert. Die Net-Fremdregistrierung eines Fahrzeuges in einem Cell-Net-Layer wird gelöscht, wenn infolge der Weiterfahrt des Fahrzeuges der Cell-Net-Layer nicht mehr zur Cell-Net-Umgebung des Fahrzeuges gehört.
- Cell-Net-Umgebung
   Die Cell-Net-Umgebung ist kommunikationsinstanzspezifisch und besteht aus einer Anzahl von Cell-Net-Layern, die um den Cell-Net-Layer angeordnet sind, in dem eine Kommunikationsinstanz net-eigenregistriert ist. Die Cell-Net-Umgebung einer Streckenzentrale bestimmt, in welchen Cell-Net-Layern eine Streckenzentrale net-fremdregistriert ist. Die Registrierung von Streckenzentralen erfolgt durch Projektierung und Anwendung der Cell-Net-Metric - statischer Zentralenschatten. Die Cell-Net- Umgebung eines Fahrzeuges bestimmt, in welchen Cell-Net-Layern ein Fahrzeug net-fremdregistiert ist. Die Registrierung von Fahrzeugen erfolgt durch Meldung linkeigenregistrierter Fahrzeuge im zuständigen Cell-Net-Layer und durch Anwendung der Cell-Net-Metric - dynamischer Fahrzeugschatten der Netzebene. Die fehlerfreie Funktion des MAC-Verfahrens erfordert eine einheitliche Größe für Cell-Net-Umgebungen aller strecken- und fahrzeugseitigen Kommunikationspartner - symmetrisches Routing.
- Cell-Net-Metric
   Die Cell-Net-Metric definiert die Cell-Net-Umgebung einer registrierten Kommunikationsinstanz. Sie wird in jedem Cell-Net-Layer für jede net-eigenregistrierte Kommunikationsinstanz bestimmt. Zur Ermittlung der Cell-Net-Metric werden Cell-Net-Metric Informationen zwischen benachbarten Cell-Net-Layern ausgetauscht. Die Cell-Net-Metric einer Kommunikationsinstanz hat den höchsten Wert in demjenigen Cell-Net-Layer, in dem die Kommunikationsinstanz net-eigenregistriert ist. Bei jeder Informationsweitergabe an den nächsten Cell-Net-Layer wird die Cell-Net-Metric dekrementiert, bis das festgelegte Limit erreicht ist. Dort endet die Cell-Net-Umgebung einer Kommunikationsinstanz.
- Use-Snd-lndex
   Der Use-Snd-lndex ist ein im streckenseitigen Cell-Link-Layer verwaltetes Maß für die sendeseitig genutzte Kanalkapazität eines Kommunikationsabschnittes zu einem eigenregistrierten Fahrzeug. Ein hoher Use-Snd-lndex bedeutet, dass das sendeseitige Datenaufkommen in einem Kommunikationsabschnitt für ein bestimmtes Fahrzeug hoch ist.
- Use-Rcv-lndex
   Der Use-Rcv-lndex ist ein im streckenseitigen Cell-Link-Layer verwaltetes Maß für die empfangsseitig genutzte Kanalkapazität eines eigenregistrierten Fahrzeug zu einem Kommunikationsabschnitt. Ein hoher Use-Rcv-lndex bedeutet, dass das empfangsseitige Datenaufkommen in einem Kommunikationsabschnitt von einem bestimmten Fahrzeug hoch ist.
- Sendesequenz
   Die Sendesequenz ist ein dynamischer Algorithmus zur Festlegung der Reihenfolge der Telegrammübertragung von einem streckenseitigen Kommunikationsabschnitt an eigenregistrierte Fahrzeuge. Die Sendesequenz wird streckenseitig in jedem Cell-Link-Layer auf der Basis von aktuell erreichbaren Zügen im Kommunikationsabschnitt und des Use-Snd-lndex bestimmt. In die Sendesequenz eines Cell-Link-Layers werden alle eigenregistrierten Züge aufgenommen. Die Sendesequenz bestimmt, wann und wie oft Nutzdaten von der Strecke an einen bestimmten Zug übermittelt werden.
- Sendeaufforderungssequenz
   Die Sendeaufforderungssequenz ist ein dynamischer Algorithmus, mit dem Fahrzeuge aufgefordert werden Daten zu senden. Für jedes registrierte Fahrzeug wird in der Sendeaufforderungssequenz ein Zeitraum vorgegeben, in dem das Fahrzeug Daten an die Strecke senden kann. Die Häufigkeit der erteilten Sendeerlaubnis ist individuell je Fahrzeug und hängt davon ab, wie hoch die Wahrscheinlichkeit für eine Antwort des Fahrzeuges im Kommunikationsabschnitt ist - Cell-Link-Metric - und wie hoch die Kanalnutzung vom Fahrzeug in der Vergangenheit war - Use-Rcv-Index. Die Sendeaufforderungssequenz wird streckenseitig in jedem Cell-Link-Layer auf der Basis der Cell-Link-Metric für link-fremdregistrierte Fahrzeuge und dem Use-Rcv-Index für link-eigenregistrierte Fahrzeuge generiert. Sie bestimmt, wann und wie oft Nutzdaten von einem bestimmten Zug an die Strecke übermittelt werden können. Da für registrierte Fahrzeuge die Sendeaufforderung fahrzeugspezifisch generiert wird und dem Fahrzeug ein individuelles Zeitfenster für die Rückantwort zugewiesen wird, kommt es bei dem Senden von Daten von registrierten Zügen an die Strecke zu keinen Datenkollisionen im Übertragungsmedium. Neben der fahrzeugspezifischen Sendeaufforderung für registrierte Fahrzeuge enthält die Sendeaufforderungssequenz weiterhin eine Aufforderung für nichtregistrierte Fahrzeuge. Diese können nach der Sendeaufforderung innerhalb eines festgelegen Zeitrahmens eine Aufnahmeanforderung an die Strecke senden. Damit ist die Aufnahme oder Wiederaufnahme von nichtregistrierten Fahrzeugen in das Zugbeeinflussungssystem in jedem Kommunikationsabschnitt möglich. Nach der Aufnahme wird aus einem nichtregistrierten Fahrzeug ein registriertes Fahrzeug. Falls sich in einem Kommunikationsabschnitt mehrere nichtregistrierte Fahrzeuge befinden und nach einer Sendeaufforderung gleichzeitig eine Aufnahmeanforderung senden, kann es zu Kollisionen bei der Datenübertragung im Übertragungsmedium kommen. In diesem Fall muss durch die fahrzeugseitigen Cell-Link-Layer eine Entflechtungsstrategie durchgeführt werden.

Nachfolgend wird der Kommunikationsablauf näher beschrieben.

Voraussetzung für die kommunikationstechnische Aufnahme eines Fahrzeuges in das Zugbeeinflussungssystem ist die Ausrüstung von Fahrzeug und Strecke mit einem Kommunikationssystem, der Aufenthalt des Fahrzeuges in einem Kommunikationsabschnitt und die Anwendung des MAC-Verfahrens.

Aus Sicht der Kommunikation erfolgt die Aufnahme eines Fahrzeuges in das Zugbeeinflussungssystem in den zwei Stufen: Registrierung eines Fahrzeuges und Aufbau eines Nutzdatenkanals.

Das MAC-Verfahren ermöglicht die Erreichbarkeit des Fahrzeuges unter einer einheitlichen Adresse und die bidirektionale Datenübertragung über die Dauer der Verwaltung des Nutzdatenkanals auch über Kommunikationsabschnittsgrenzen - Zellgrenzen - hinweg.
Außerhalb des MAC-Verfahrens können weitere Protokollschichten auf den Diensten des MAC-Verfahrens aufbauen, um beispielsweise die Datenübertragung kryptologisch zu sichern. Sofern ein Fahrzeug registriert ist und das Routing der Daten zu einem Kommunikationspartner möglich ist, kann ein Nutzdatenkanal eingerichtet werden. Die Anforderung eines Nutzdatenkanals kann auf Initiative einer Streckenzentrale oder eines Fahrzeuges erfolgen. Neben einer beliebigen Anzahl von Nutzdatenkanälen zwischen Fahrzeugen und Streckenzentralen können auch beliebige Nutzdatenkanale zwischen zwei Fahrzeugen oder zwischen zwei Streckenzentralen etabliert werden.
Der Nutzdatenkanal ist verbindungsorientiert und wird von den PP-Link-Layern der Kommunikationsinstanzen verwaltet. Er wird auch bei Zellwechseln aufrechterhalten. Von den beteiligten PP-Link-Layern werden Datensegmentierung/-reassemblierung, Fehlerkorrektur, Flusskontrolle, sowie Nutzkanalverwaltung inklusive Auf- / Abbau und keep alive organisiert. Im Nutzdatenkanal werden die Nutzdaten der beteiligten Kommunikationsinstanzen vollständig, fehlerfrei und mit der geforderten Dienstqualität (QoS) Ende-zu-Ende übertragen. Durchsatz und Delay hängen dabei wesentlich vom verwendeten Kommunikationsmedium ab.
Der Nutzdatenkanal wird auf Anforderung einer Kommunikationsinstanz abgebaut oder durch das MAC-Verfahren infolge von Routing- oder Kommunikationsfehlern.

Fahrzeuge, die mittels MAC-Verfahren kommunizieren wollen, mussen zunächst kommunikationstechnisch registriert werden. Die Registrierung setzt die physikalische Funktion der mobilen Datenübertragung zwischen Kommunikationsabschnitt und Fahrzeug voraus. Abhängig vom jeweils verwendeten Kommunikationssystem kann eine kommunikationsabschnittsspezifische Steuerung der physikalischen Datenübertragung durch den Cell-Adaption-Layer, z. B. Frequenzumschaltung, in jedem Kommunikationsabschnitt notwendig sein. Sofern notwendige kommunikationsabschnittsspezifische Steuerungsinformationen in einem nichtregistrierten Fahrzeuge nicht verfügbar sind, muss ein systematisches Prüfen der möglichen Steuerungsvarianten, z. B. Scannen aller verwendeten Frequenzen, durch den fahrzeugseitigen Cell-Adaption-Layer vorgenommen werden, um im aktuell befindlichen Kommunikationsabschnitt eine Datenübertragung zu ermöglichen.
Durch jeden streckenseitigen Cell-Link-Layer werden periodisch Sendeaufforderungssequenzen an Fahrzeuge gesendet. Nichtregistrierte Fahrzeuge erhalten mittels einer in der Sendeaufforderungssequenz enthaltenen Aufnahmeaufforderung die Möglichkeit, ein Aufnahmegesuch an die Streckenzentrale zu senden. Sobald ein streckenseitiger Cell-Link-Layer ein Aufnahmegesuch von einem Fahrzeug empfängt, wird das Fahrzeug link-eigenregistriert. Das link-eigenregistrierte Fahrzeug wird nun in die Sendeaufforderungssequenz des streckenseitigen Cell-Link-Layers übernommen. Über die Cell-Link-Metric erhalten die benachbarten Cell-Link-Layer Kenntnis von der Fahrzeugregistrierung und verwalten daraufhin das Fahrzeug als link-fremdregistriert. Nach Sendung eines Aufnahmegesuches an den streckenseitigen Cell-Link-Layer, erwartet ein Fahrzeug eine Bestätigung der Registierung durch Aufnahme in die Sendeaufforderungssequenz. Unterbleibt die Registrierung, beispielsweise durch Kollision von gleichzeitigen Aufnahmegesuchen mehrerer Fahrzeuge innerhalb eines Cell-Link-Layers, wird durch das Fahrzeug eine Kollisionsbehandlung durchgeführt, z. B. zufällige Wartezeit bis erneute Reaktion auf neue Aufnahmeanforderung. Die Information über link-eigenregistrierte Fahrzeuge wird vom streckenseitigen Cell-Link-Layer an den übergeordneten Cell-Net-layer übergeben. Damit wird die Grundlage für das Routing von Nutzdaten zu erreichbaren Fahrzeugen aktualisiert. Über die Cell-Net-Metric erhalten die benachbarten Cell-Net-Layer Kenntnis von der Fahrzeugregistrierung und verwalten daraufhin das Fahrzeug als net-fremdregistriert. Damit ist die Registrierung des Fahrzeuges im MAC-Protokollstack abgeschlossen. Es besteht somit die Möglichkeit, auf Anforderung der fahrzeugseitigen oder streckenseitigen Kommunikationsinstanzen Nutzdatenkanale zum Fahrzeug aufzubauen. Mit der Registrierung eines Fahrzeuges wird die Adresse des Fahrzeuges im MAC-Protokollstack bekannt gegeben und die verbindungslose Kommunikation zwischen den beteiligten fahrzeugseitigen und streckenseitigen Cell-Link-Layern aufgenommen. Diese Kommunikation wird über die gesamte Dauer der Registrierung aufrechterhalten und auch bei einem Zellwechsel des Fahrzeuges im benachbarten Kommunikationsabschnitt fortgesetzt. Die Registrierung eines Fahrzeuges sorgt für dessen Lokalisierung und Verfolgung im MAC-Verfahren und schafft damit die potentielle Voraussetzung zur Einrichtung von Nutzdatenkanälen zwischen Kommunikationsinstanzen. Mit der streckenseitigen Registrierung wird infolge der Link-Eigenregistrierung und Link-Fremdregistrierung eine lokale Bekanntheit in benachbarten Kommunikationsabschnitten für ein Fahrzeug geschaffen, während durch die Net-Eigenregistrierung und Net-Fremdregistrierung eine globale Erreichbarkeit des Fahrzeuges im Kommunikationssystem hergestellt wird.

Im streckenseitigen Cell-Net-Layer werden zwei Arten von Routinginformationen verwaltet:
1. Routinginformationen über erreichbare Streckenzentralen:
   Die Registrierung einer Streckenzentrale in einem Cell-Net-Layer hat zur Folge, dass die Streckenzentrale als net-eigenregistriert verwaltet wird. Über die Cell-Net-Metric erhalten die benachbarten Cell-Net-Layer Kenntnis von der Streckenzentralenregistrierung und verwalten daraufhin die Streckenzentrale als net-fremdregistriert.
2. Routinginformationen über erreichbare Fahrzeuge:
   Wenn Informationen über link-eigenregistrierte Fahrzeuge vom steckenseitigen Cell-Link-Layer an den übergeordneten Cell-Net-Layer übergeben werden, hat dieses zur Folge, dass die entsprechenden Fahrzeuge im Cell-Net-Layer als net-eigenregistriert verwaltet werden. Über die Cell-Net-Metric erhalten die benachbarten Cell-Net-Layer Kenntnis von der Fahrzeugregistrierung und verwalten daraufhin die Fahrzeuge als net-fremdregistriert. Im Cell-Net-Layer erfolgt auf der Basis der Routinginformationen das Routing der Verbindungsanforderungen und Nutzdaten zwischen Kommunikationsinstanzen. Das Routing von Verbindungsanforderungen von einer ersten Kommunikationsinstanz zu einer zweiten Kommunikationsinstanz ist immer dann möglich, wenn der Cell-Net-Layer, in der die ersten Kommunikationsinstanz net-eigenregistriert ist, sich in der Cell-Net-Umgebung der zweiten Kommunikationsinstanz befindet. Ein Nutzdatenkanal kann zwischen Kommunikationsinstanzen solange aufrechterhalten werden, wie die Cell-Net-Layer, in denen die Kommunikationsinstanzen net- eigenregistriert sind, sich in der Cell-Net-Umgebung der jeweils anderen Kommunikationsinstanz befinden. Für das Routing benutzt jeder Cell-Net-Layer seine Informationen über net-eigenregistrierte und net-fremdregistrierte Kommunikationsinstanzen und die Nachbarschaftsbeziehung net-fremdregistrierter Kommunikationsinstanzen. Mit Hilfe dieser Daten kann jeder Cell-Net-Layer für jedes Datagramm die Entscheidung treffen, ob es an PP-Link-Layer, Cell-Net-Layer oder Cell-Link-Layer weiterzuleiten oder zurückzuweisen ist.

Mit Hilfe des MAC-Verfahrens kann unter Nutzung von zellular aufgebauten Kommunikationssystemen kontinuierliche verbindungsorientierte Datenübertragung zwischen verschiedenen mobilen und ortsfesten Kommunikationsteilnehmern realisiert werden.
Das MAC-Verfahren ist für die Anwendung von kontinuierlichen Zugsicherungs- und Steuerungsverfahren, insbesondere für den moving block Betrieb geeignet.
Die Anforderungen an das unterlagerte Datenübertragungssystem zur mobilen Datenübertragung sind gering. Das Datenübertragungssystem muss beispielsweise keinen Zellwechsel unterstützen, da diese Funktionen vom MAC-Verfahren übernommen werden.
Für den Einsatz des MAC-Verfahrens können verschiedene unterlagerte Übertragungssysteme verwendet werden. Deren Eigenschaften können durch das MAC- Verfahren in weiten Grenzen angepasst werden.

Mit dem MAC-Verfahren wird die kritische Ressource - mobile Datenübermittlung - schonend und effektiv eingesetzt. Das mobile Datenübertragungsvolumen wird minimiert, so dass die vorhandene Übertragungskapazität für Nutzdaten maximiert wird.

Der Applikation wird durch das MAC-Verfahren ein verbindungsorientierter zuverlässiger Datenkanal mit definierten Eigenschaften und Zugangsschnittstelle bereitgestellt. Die sicherheitskritische Applikation wird damit von Übertragungsfunktionen entlastet.

Die Anwendung des MAC-Verfahrens entkoppelt die Applikationen zur Zugsteuerung von der Spezifik des verwendeten Übertragungssystems. Dadurch können Änderungen in der Übertragung ohne Rückwirkung auf die Applikationen erfolgen.

Das MAC-Verfahren kann flexibel an die Erfordernisse der Applikationen angepasst werden. Das betrifft insbesondere
- die Anzahl der Fahrzeuge und Streckenzentralen und deren Verbindungsrelationen, wobei auch Verbindungen zwischen zwei Streckenzentralen und zwischen zwei Fahrzeugen möglich sind,
- die lokale Erreichbarkeit von Fahrzeugen und Streckenzentralen - Metric,
- die QoS des Übertragungskanals wie beispielsweise Durchsatz, Delay, Priorisierung usw. sowie
- die parallele Bereitstellung mehrerer und verschiedener Kanäle mit angepassten Eigenschaften für Applikationen unterschiedlichen Typs, beispielsweise separate Kanäle für Zugsicherung und Zugsteuerung.
Das MAC-Verfahren kann mit anderen Übertragungsprotokollen kombiniert werden, z. B. EURORADIO-Sicherungsverfahren.
Die Aufnahme eines Fahrzeuges in das Zugsteuerungssystem ist an jedem Ort der ausgerüsteten Strecke möglich.
Die einheitliche Adressierung und die integrierte Verfolgung eines Fahrzeuges ermöglichen die Verbindungsaufnahme von mobiler und ortsfester Seite aus.
Das MAC-Verfahren ist tolerant gegen Übertragungsfehler und Übertragungsausfälle. Ausgefallene Kommunikationsabschnitte können ohne Abbruch der Verbindung zum Fahrzeug überbrückt werden. Übertragungsfehler werden durch Fehlerkorrektur im PP-Link-Layer kompensiert.
Die verwendeten Protokolle sind einfach zu implementieren und auf mobiler und ortsfester Seite zum großen Teil symmetrisch. Dadurch ist eine Kosten sparende und risikoarme Entwicklung möglich.

Nachfolgend wird die Erfindung anhand figürlicher Darstellungen näher erläutert. Es zeigen
- Figur 1: eine Grundstruktur des MAC-Verfahrens,
- Figur 2: eine Datenstruktur im PP-Link-Layer,
- Figur 3: eine Datenstruktur im streckenseitigen Cell-Net-Layer,

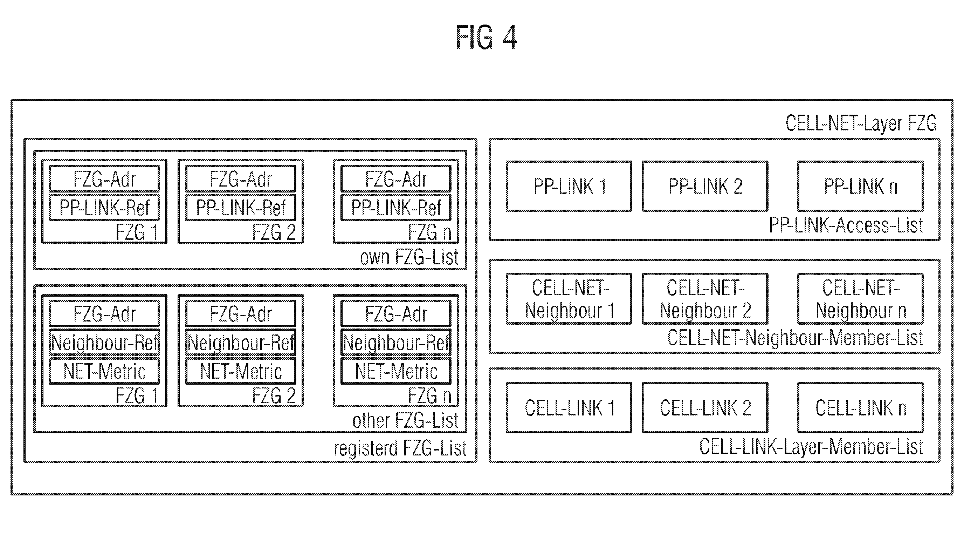

- Figur 4: eine Datenstruktur im fahrzeugseitigen Cell-Net-Layer,
- Figur 5: eine Datenstruktur im streckenseitigen Cell-Link-Layer und
- Figur 6: eine Datenstruktur im fahrzeugseitigen Cell-Link-Layer.

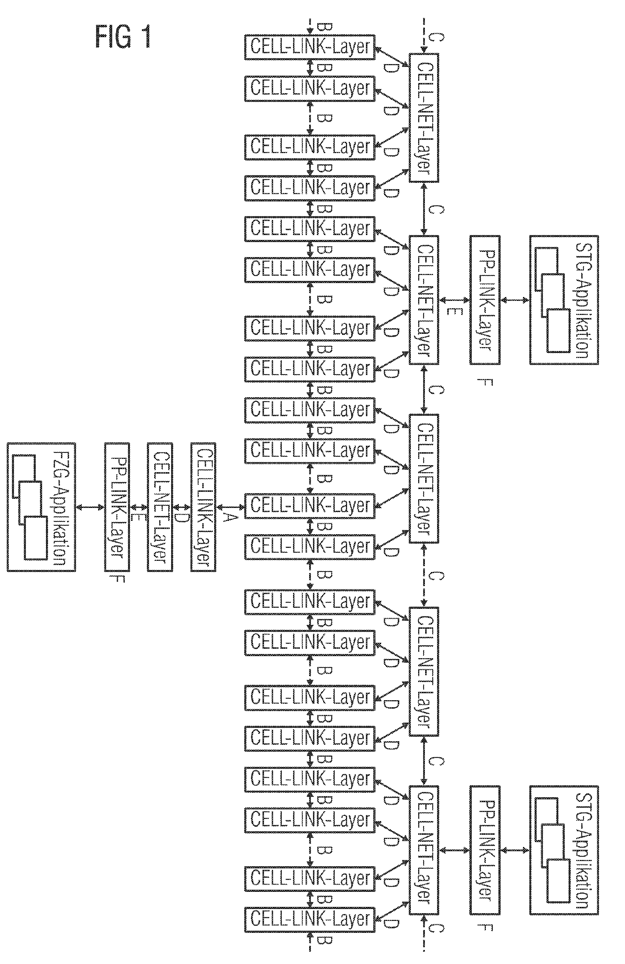

Zwischen den MAC-Protokollschichten Cell-Link-Layer, Cell-Net-Layer und PP-Link-Layer gemäß Figur 1 werden folgende Informationen ausgetauscht:
A: Kommunikation Cell-link-Layer ↔ Cell-Link-Layer:
   - in Richtung Fahrzeug FZG:
      ■ Daten (SND)-, Bestätigungs (AKN)- oder Leer-Primitiven inklusive Absender- und Zieladresse innerhalb der Sendesequenz,
      ■ Sendeaufforderung, das heißt Adresse des Fahrzeuges mit Sendeberechtigung, innerhalb der Sendeaufforderungssequenz und
      ■ Aufforderung an nicht registrierte Fahrzeuge zum Senden einer Aufnahmeanforderung innerhalb der Sendeaufforderungssequenz, adressiert an alle Fahrzeuge.
   - in Richtung Streckenzentrale STG:
      ■ Daten (SND)-, Bestätigungs (AKN)- oder Leer-Primitiven inklusive Absender- und Zieladresse entsprechend empfangener Sendeaufforderung und
      ■ Aufnahmeanforderung - Leerprimitive - durch nichtregistrierte Fahrzeuge entsprechend empfangener Sendeaufforderung inklusive Entflechtungsstrategie bei kollidierenden Aufnahmegesuchen, z. B. zufälliger Wiederholzyklus bezüglich Aufnahmeaufforderungen.
B: Nachbar-Kommunikation Cell-Link-Layer ↔ Cell-Link-Layer:
   ■ Cell-Link-Metric Information, das heißt Referenzen Nachbar Cell-Link-Layer, registrierte Fahrzeugadressen und zugehörige Cell-link-Metric und
   ■ Zellspezifische Daten zur Ansteuerung des Cell-Adaption Layers, z. B. Frequenz, optional.
C: Nachbar-Kommunikation Cell-Net-Layer ↔ Cell-Net-Layer:
   ■ Cell-Net-Metric Information, das heißt Referenzen Nachbar Cell-Net-layer, registrierte Adressen von Kommunikationsinstanzen und zugehbrige Cell-link-Metric und
   ■ Nutzdatenstrom und Flushkommandos.
D: Kommunikation Cell-Net-Layer ↔ Cell-Link-Layer:
   - Cell-Net-Layer → Cell-Link-Layer:
      ■ Daten (SND)- oder Bestätigungs (AKN)- Primitiven inklusive Absender- und Zieladresse und
      ■ nur auf der Streckenseite: Rücknahme FlUSH-Primitiven zur Freigabeaufforderung von im Cell-Link-Layer zwischengespeicherten und bereits über alternative Cell-Ressourcen bestätigte Datenprimitiven (SND)
   - Cell-Link-Layer → Cell-Net-Layer:
      ■ nur auf der Streckenseite: Adressen link-eigenregistrierter Fahrzeuge - Cell-Link-Memberlist und
      ■ Daten (SND)- oder Bestatigungs (AKN)- Primitiven inklusive Absender- und Zieladresse.
E: Kommunikation PP-Link-Layer ↔ Cell-Net-Layer:
   - PP-Link-Layer → Cell-Net-Layer:
      ■ Daten (SND)- oder Bestätigungs (AKN)- Primitiven inklusive Absender- und Zieladresse und
      ■ nur auf der Streckenseite: Rücknahme FlUSH-Primitiven zur Freigabeaufforderung von im Cell-Net-Layer und/oder darunter zwischengespeicherten und bereits über alternative Cell-Ressourcen bestätigte Datenprimitiven (SND) .
   - Cell-Net-Layer → PP-Link-Layer:
      ■ Daten (SND)- oder Bestätigungs (AKN)- Primitiven inklusive Absender- und Zieladresse.
F: Kommunikation PP-Link-Layer ↔ PP-Link-Layer:
   ■ Daten (SND)- oder Bestätigungs (AKN)- Primitiven inklusive Absender- und Zieladresse.

### Aufbau Nutzdatenkanal durch Strecke:

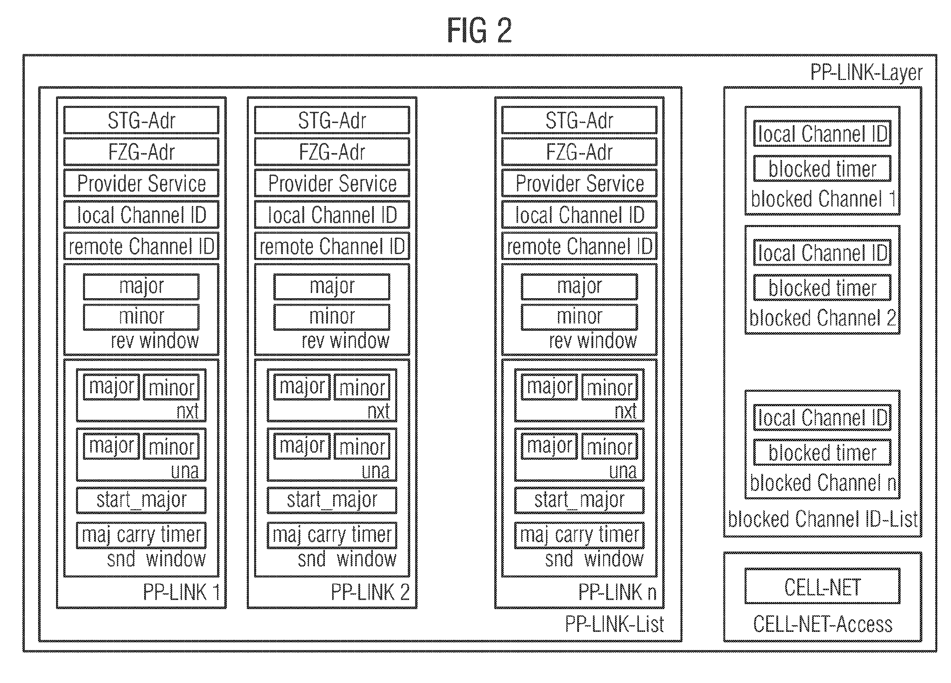

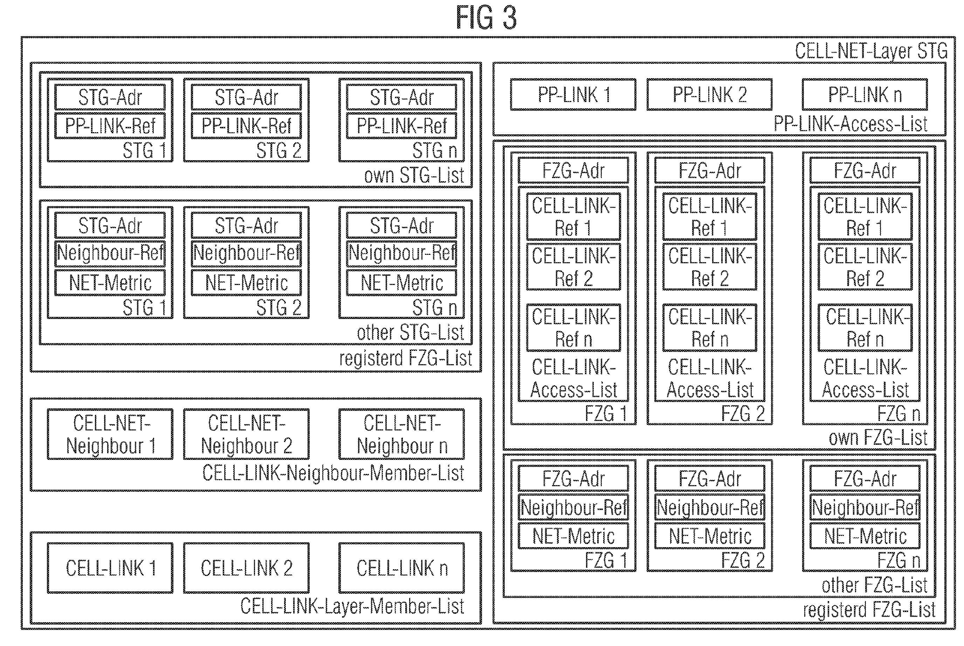

Der Nutzdatenkanal wird auf Anforderung einer streckenseitigen Kommunikationsinstanz aufgebaut. Die Aufbauanforderung wird an den zuständigen PP-Link-Layer der streckenseitigen Kommunikationsinstanz übergeben. Der PP-Link-Layer erzeugt eine Verwaltungsinstanz für den aufzubauenden Nutzdatenkanal. (Figur 2) Die Verbindungsaufbauanforderung wird durch den PP-Link-Layer an den zuständigen Cell-Net-Layer (Figur 3) übergeben. Der Cell-Net-Layer prüft, ob die in der Verbindungsaufbauanforderung enthaltene Zieladresse FZG-Adr im Cell-Net-Layer als net-eigenregistriert oder net-fremdregistriert verwaltet wird. Ist das nicht der Fall, wird die vom PP-Link-Layer übergebene Verbindungsaufbauanforderung vom Cell-Net-Layer zurückgewiesen.
Ist die Zieladresse im Cell-Net-Layer net-fremdregistriert, wird die Verbindungsaufbauanforderung so lange an den aus Sicht des Cell-Net-Layers zuständigen Nachbar Cell-Net-Layer zur Weiterverarbeitung übergeben, bis ein Cell-Net-Layer die Zieladresse (FZG-Adr) als net-eigenregistriert erkennt.
Ist die Zieladresse im Cell-Net-Layer net-eigenregistriert und das Kommunikationsziel eine Streckenzentrale, das heißt Verbindung zwischen zwei Streckenzentralen, wird die Verbindungsaufbauanforderung an den zuständigen PP-Link-Layer Übergeben.
Ist die Zieladresse ein im Cell-Net-Layer net-eigenregistriertes Fahrzeug, dann erfolgt die Übergabe der Verbindungsaufbauanforderung an alle vom Cell-Net-Layer verwalteten Cell-Link-Layer, in denen das Fahrzeug zu diesem Zeitpunkt als link-eigenregistriert verwaltet wird. Die Verbindungsaufbauanforderung wird vom streckenseitigen Cell-Link-Layer im Rahmen der Sendesequenz an den Cell-Link-Layer des adressierten Fahrzeuges übertragen.
Empfängt der Cell-Link-Layer des adressierten Fahrzeuges die Verbindungsaufbauanforderung, wird diese über den Cell-Net-Layer an den PP-Link-Layer des Fahrzeuges übergeben. Die weiteren Aktivitäten des Nutzdatenkanalaufbaues und der Übertragung von Nutzdaten werden durch die PP-Link-Layer der Kommunikationsinstanzen koordiniert.

### Aufbau Nutzdatenkanal durch Fahrzeug:

Soll der Nutzdatenkanal auf Anforderung einer fahrzeugseitigen Kommunikationsinstanz aufgebaut werde, wird die Aufbauanforderung an den zuständigen fahrzeugseitigen PP-Link-Layer übergeben. Der PP-Link-Layer erzeugt eine Verwaltungsinstanz für den aufzubauenden Nutzdatenkanal (Figur 2).
Über den Cell-Net-Layer wird die Verbindungsaufbauanforderung an den fahrzeugseitigen Cell-Link-Layer übergeben. Durch den fahrzeugseitigen Cell-Link-Layer erfolgt die Übertragung der Verbindungsaufbauanforderung zum streckenseitigen Cell-Link-Layer eingebettet in die fahrzeugseitigen Primitiven des Cell-Link-Layers entsprechend der empfangenen Sendeaufforderungen der Sendesequenz des streckenseitigen Cell-Link-Layers.
Auf der Streckenseite wird die Verbindungsaufbauanforderung an den den Cell-Link-Layer verwaltenden Cell-Net-Layer übergeben. Der Cell-Net-Layer prüft, ob die in der Verbindungsaufbauanforderung enthaltene Zieladresse im Cell-Net-Layer als net-eigenregistriert oder net-fremdregistriert verwaltet wird. Ist das nicht der Fall, wird die fahrzeugseitige Verbindungsaufbauanforderung vom Cell-Net-Layer zurückgewiesen. Ist die Zieladresse im Cell-Net-Layer net-fremdregistriert, wird die Verbindungsaufbauanforderung so lange an den aus Sicht des Cell-Net-Layers zuständigen Nachbar Cell-Net-Layer zur Weiterverarbeitung übergeben, bis ein Cell-Net-Layer die Zieladresse als net-eigenregistriert erkennt.
Ist die Zieladresse im Cell-Net-Layer net-eigenregistriert und das Kommunikationsziel eine Streckenzentrale, das heißt Verbindung zwischen zwei Streckenzentralen, wird die Verbindungsaufbauanforderung an den zuständigen PP-link-Layer übergeben.
Ist die Zieladresse ein im Cell-Net-Layer net-eigenregistriertes Fahrzeug, dann erfolgt die Übergabe der Verbindungsaufbauanforderung an alle vom Cell-Net-Layer verwalteten Cell-Link-Layer, in denen das Fahrzeug zu diesem Zeitpunkt als link-eigenregistriert verwaltet wird. Die Verbindungsaufbauanforderung wird vom streckenseitigen Cell-Link-Layer im Rahmen der Sendesequenz an den Cell-Link-Layer des adressierten Fahrzeuges übertragen.

### Datenübertragung von der Strecke:

Nutzdatensegmente, die die von der streckenseitigen Kommunikationsinstanz an den PP-Link-Layer übergebenen Nutzdaten repräsentieren, werden an den zuständigen Cell-Net-Layer übergeben. Auf Grundlage der Routinginformationen werden Kopien der Nutzdatensegmente an alle Nachbar Cell-Net-Layer verteilt, in denen die Zieladresse als net-eigenregistriert oder net-fremdregistriert verwaltet wird - Cell-Net-Umgebung der Kommunikationsinstanz der Zieladresse. Wenn die Zieladresse weder net-eigenregistriert noch net-fremdregistriert ist, werden die entsprechenden Nutzdatensegmente verworfen. In diesem Fall bricht der Nutzdatenkanal auf PP-Link-Ebene nach time-out zusammen.
Ist die Zieladresse im Cell-Net-Layer net-fremdregistriert, wird das Nutzdatensegment so lange an den aus Sicht des Cell-Net-Layers zuständigen Nachbar Cell-Net-Layer zur Weiterverarbeitung übergeben, bis ein Cell-Net-Layer die Zieladresse als net-eigenregistriert erkennt.
Ist die Zieladresse im Cell-Net-Layer net-eigenregistriert und das Kommunikationsziel eine Streckenzentrale, das heißt Verbindung Streckenzentrale - Streckenzentrale, wird das Nutzdatensegment an den zuständigen PP-Link-Layer übergeben.
Ist die Zieladresse ein im Cell-Net-Layer net-eigenregistriertes Fahrzeug, dann erfolgt die Übergabe des Nutzdatensegmentes an alle vom Cell-Net-Layer verwalteten Cell-Link-Layer, in denen das Fahrzeug zu diesem Zeitpunkt als link-eigenregistriert verwaltet wird. Das Nutzdatensegment wird vom streckenseitigen Cell-Link-Layer im Rahmen der Sendesequenz an den Cell-Link-Layer des adressierten Fahrzeuges übertragen. Im Fahrzeug wird das Nutzdatensegment vom Cell-Link-Layer über den Cell-Net-Layer zum PP-Link-Layer Übergeben.
Das Nutzdatensegment wird im PP-Link-Layer mit einer Quittung bestätigt. Bei Eintreffen der Quittung im PP-Link-Layer des Absenders des Nutzdatensegmentes wird an den zuständigen Cell-Net-Layer eine Flush-Primitive übergeben. Auf Grundlage der Routinginformationen werden Kopien der Flush-Primitiven an alle Nachbar Cell-Net-Layer verteilt, in denen die Zieladresse als net-eigenregistriert oder net-fremdregistriert verwaltet wird. Infolge des Eintreffens der Flush-Primitive wird das gegebenenfalls zwischengespeicherte Nutzdatensegment, auf das sich die Flush-Primitive bezieht, gelöscht.

### Datenübertragung vom Fahrzeug:

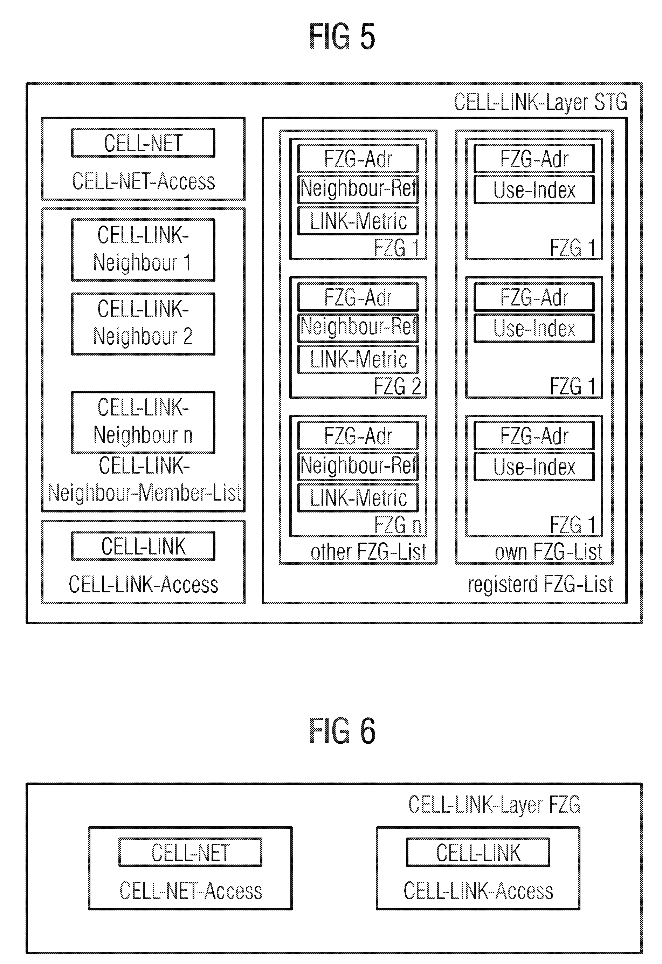

Nutzdatensegmente, die die von der fahrzeugseitigen Applikation FZG-Applikation (Figur 1) an den PP-Link-Layer übergebenen Nutzdaten repräsentieren, werden über den Cell-Net-Layer an den fahrzeugseitigen Cell-Link-Layer (Figur 6) übergeben.
Durch den fahrzeugseitigen Cell-Link-Layer erfolgt die Übertragung des Nutzdatensegmentes zum streckenseitigen Cell-Link-Layer, eingebettet in die fahrzeugseitigen Primitiven des Cell-Link-Layers entsprechend der empfangenen Sendeaufforderungen der Sendesequenz des streckenseitigen Cell-Link-Layers.

Auf der Streckenseite wird das Nutzdatensegment an den den Cell-Link-Layer verwaltenden Cell-Net-Layer übergeben. Der
Cell-Net-Layer prüft, ob die in dem Nutzdatensegment enthaltene Zieladresse im Cell-Net-Layer als net-eigenregistriert oder net-fremdregistriert verwaltet wird. Ist das nicht der Fall, wird das fahrzeugseitige Nutzdatensegment vom Cell-Net-Layer verworfen. In diesem Fall bricht der Nutzdatenkanal auf PP-link-Ebene nach time-out zusammen.
Ist die Zieladresse im Cell-Net-Layer net-fremdregistriert, wird das Nutzdatensegment so lange an den aus Sicht des Cell-Net-layers zuständigen Nachbar Cell-Net-Layer zur Weiterverarbeitung übergeben, bis ein Cell-Net-Layer die Zieladresse als net-eigenregistriert erkennt.
Ist die Zieladresse im Cell-Net-Layer net-eigenregistriert und das Kommunikationsziel eine Streckenzentrale, das heißt Verbindung zwischen Fahrzeug und Streckenzentrale, wird das Nutzdatensegment an den zuständigen PP-link-Layer übergeben. Ist die Zieladresse ein im Cell-Net-layer net-eigenregistriertes Fahrzeug, das heißt Verbindung zwischen zwei Fahrzeugen, dann erfolgt die Übergabe des Nutzdatensegmentes an alle vom Cell-Net-Layer verwalteten Cell-Link-Layer, in denen das Fahrzeug zu diesem Zeitpunkt als link-eigenregistriert verwaltet wird. Das Nutzdatensegment wird vom streckenseitigen Cell-Link-Layer im Rahmen der Sendesequenz an den Cell-Link-Layer des adressierten Fahrzeuges übertragen. Das Nutzdatensegment wird im PP-link-Layer mit einer Quittung bestätigt. Quittungen werden in gleicher Art und Weise wie Nutzdatensegmente und gegebenenfalls zusammen mit Nutzdatensegmenten übertragen. Das Eintreffen der Quittung im PP-Link-Layer des Absenders bestätigt die korrekte Datenübermittlung. Quittungen werden nicht quittiert.
Quittungen, die in streckenseitige Cell-Net-Layer, in denen das Fahrzeug net-fremdregistriert ist, verteilt und nicht übertragen werden, werden durch jüngere Quittungen an dasselbe Fahrzeug Überschrieben. Dadurch wird das Datenaufkommen bezüglich Quittungen reduziert.

### Zellwechsel Linkebene:

Verlässt ein Fahrzeug einen Kommunikationsabschnitt, bricht die Kommunikation zwischen den kommunizierenden Cell-Link-Layern des Fahrzeuges und des Kommunikationsabschnittes zusammen. Es erfolgt der Versuch der Kommunikationsaufnahme im benachbarten Kommunikationsabschnitt. Da das Fahrzeug im Cell-Link-Layer des benachbarten Kommunikationsabschnitts link-fremdregistriert ist, wird es in dessen Sendeaufforderungssequenz berücksichtigt. Die Häufigkeit der Sendeanforderung an das link-fremdregistrierte Fahrzeug wird mittels der Cell-Link-Metric variabel gehalten und garantiert dadurch eine Schonung der Reservierung von Kommunikationsresourcen. Damit kann die Kommunikation mit dem Fahrzeug im neuen Kommunikationsabschnitt fortgesetzt werden, sobald die physikalische Übertragung etabliert ist. Abhängig vom verwendeten Übertragungssystem muss eine Umschaltung auf den neuen Kommunikationsabschnitt erfolgen, zum Beispiel Frequenzumschaltung, um die physikalische Datenübertragung im neuen Kommunikationsabschnitt aufzunehmen. Dafür fahrzeugseitig benötigte Informationen über Nachbar-Kommunikationsabschnitte werden bereits vor dem Kommunikationsabschnittswechsel zwischen den kommunizierenden Cell-Link-Layern ausgetauscht. Sofern in Fahrtrichtung des Fahrzeuges mehrere benachbarte Kommunikationsabschnitte existieren und die Umschaltung fahrzeugseitig erfolgt, werden im fahrzeugseitigen Cell-Adaption-Layer solange abwechselnde Umschaltungen auf benachbarte Kommunikationsabschnitte durchgeführt, bis eine erneute Kommunikation erreicht wird oder time out eintritt. 1m Falle von time out ist das Fahrzeug kommunikationstechnisch nicht mehr registriert. Im Fahrzeug beginnt daraufhin der Ablauf für die erneute Registrierung

Empfängt das Fahrzeug im neuen Kommunikationsabschnitt ein Datagramm mit einer an das Fahrzeug adressierten Sendeaufforderungssequenz, wird durch den fahrzeugseitigen Cell-Link-Layer ein Datagramm - Quittung oder Nutzdatensegment - gesendet.
Bei Empfang eines Datagramms im streckenseitigen Cell-Link-Layer (Figur 5) wird das Fahrzeug daraufhin link-eigenregistriert. Das Fahrzeug wird in die Sendesequenz des Cell-Link-Layers des neuen Kommunikationsabschnittes aufgenommen und mit aktuellen Nutzdaten versorgt.
Mittels Aktualisierung der Cell-Link-Metric zwischen den streckenseitigen Cell-Link-Layern wird die Cell-Link-Umgebung des Fahrzeuges angepasst.
Die Veränderung der Link-Eigenregistrierung wird dem zuständigen Cell-Net-Layer bekannt gegeben. Mittels Cell-Net-Metric wird die Cell-Net-Umgebung des Fahrzeuges aktualisiert. Im Cell-Link-Layer des verlassenen Kommunikationsabschnitts wird nach time-out der Registrierungszustand des Fahrzeuges von link-eigenregistriert auf link-fremdregistriert geändert.

### Zellwechsel Netzebene:

Streckenseitige Cell-Net-Layer verwalten mehrere Cell-Link-Layer. Findet ein Kommunikationsabschnittswechsel zwischen Cell-Link-Layern statt, die von einem gemeinsamen Cell-Net-Layer verwaltet werden, dann gibt es keine Veränderung im Routing der Cell-Net-Layer.
Findet ein Zellwechsel zwischen Cell-Link-Layern statt, die von verschiedenen Cell-Net-Layern verwaltet werden, erfolgt eine Net-Eigenregistrierung des Fahrzeuges im Cell-Net-Layer, dem der Cell-Link-Layer des neuen Kommunikationsabschnittes zugeordnet ist. Ausgehend von der veränderten Net-Eigenregistrierung wird mittels Cell-Net-Metric in den benachbarten Cell-Net-Layern eine angepasste Cell-Net-Umgebung gebildet. Die Cell-Net-Umgebung des Fahrzeuges verschiebt sich dadurch in Fahrtrichtung des Fahrzeuges. Die Kommunikation zwischen den Kommunikationspartnern ist nur dann weiter möglich, wenn der Cell-Net-Layer, in dem das Fahrzeug net-eigenregistriert ist, sich weiterhin in der Cell-Net-Umgebung des Kommunikationspartners befindet.
Mit der durch den Zellwechsel veränderten Cell-Net-Umgebung wird das Routing in der Netzebene aktualisiert. Diese kann zu folgenden Veränderungen in der Kommunikation führen:
- Die Kommunikation zweier Kommunikationsinstanzen bricht ab, weil das Routing der Verbindung in der Netzebene nicht mehr möglich ist. Beispielsweise kann ein Fahrzeug eine Streckenzentrale nicht mehr erreichen, weil es sich außerhalb deren Steuerbereiches befindet. Die Verbindung bricht zwischen den beteiligten PP-Link-Layern zusammen und es erfolgt eine Fehlermeldung an die Kommunikationsinstanzen.
- Die Kommunikation kann mit verändertem Routing lückenlos fortgesetzt werden. Der Zellwechsel ist für die beteiligten PP-Link-Layer transparent.
- Es sind neue Kommunikationsverbindungen möglich, weil neue Routingmöglichkeiten bestehen. Ein Fahrzeug kann beispielsweise nach dem Zellwechsel eine Verbindung zu einer anderen Streckenzentrale aufbauen.
Sofern das Fahrzeug mehrere Verbindungen zu verschiedenen Kommunikationspartnern benötigt, können diese Veränderungen in der Kommunikation individuell bei jeder dieser Verbindungen eintreten.

### Adressierung:

Jedes Fahrzeug und jede Streckenzentrale hat eine individuelle eindeutige Adresse im System, zum Beispiel ETCS-Adresse. Beim Aufbau des Nutzdatenkanals zwischen zwei Kommunikationsinstanzen wird das Kommunikationsziel durch die angegebene Adresse festgelegt. Falls im Fahrzeug oder der Streckenzentrale mehrere Applikationen mit Datenübertragungsbedarf existieren, kann die Adresse einer Kommunikationsinstanz im Fahrzeug oder in der Streckenzentrale mit einem Applikationsidentifier, zum Beispiel ETCS-Typ, erweitert werden.
Die eigene Adresse einer Kommunikationsinstanz ist dieser bekannt und wird durch den MAC-Protokollstack für die Kommunikation verwendet. Mittels Routinginformationen werden die Adressen registrierter Kommunikationspartner entsprechend der Cell-Link-Metric und der Cell-Net-Metric im System verteilt.
Eine zusätzliche Adressierungsebene wird durch das MAC-Verfahren selbst nicht benötigt.

### Protokollarchitektur:

Für die Anwendung des MAC-Verfahrens ist eine layerweise aufgebaute Protokollarchitektur - in Anlehnung an OSI - vorgesehen.
Oberhalb des MAC-Protokollstacks befinden sich die Anwendungsprotokollschichten. Diese können neben der Zugsteuerungsapplikation auch weitere Übertragungsprotokolle umfassen, zum Beispiel EURORADIO beziehungsweise Untermenge EURORADIO.
Es schließt sich der MAC-Protokollstack an mit den Protokollschichten PP-Link-Layer, Cell-Net-Layer und Cell-Link-Layer.

Unterhalb des MAC-Protokollstacks befindet sich optional ein Cell-Adaption-Layer zur Ansteuerung des Kommunikationssystems. Weiterhin befinden sich darunter Protokollschichten des Kommunikationssystems, die mindestens die Bitübertragungsschicht - Layer 1 - umfassen.

### Protokollfunktionalität Cell-Link-Layer:

Der Cell-Link-Layer beinhaltet folgende Funktionalitäten:
■ asynchrone Datenübertragung zwischen Fahrzeug und Strecke,
■ streckenseitig geführte Sende- und Sendeaufforderungssequenz,
■ Verwaltung potentieller Komunikationspartner - Memberinformation,
■ Kommunikation mit übergeordnetem Cell-Net-Layer zwecks Datenaustausch und Meldung von Link-Eigenregistrierung,
■ streckenseitige Kommunikation mit Nachbar Cell-Link-Layern zwecks Übertragung von Cell-link-Metric Informationen und
■ Ansteuerung Cell-Adaption-Layer, das heißt Übertragung von Zellansteuerungsinformationen von der Strecke zum Fahrzeug und Übergabe zellbezogener Informationen zur Ansteuerung der Kommunikationsmittel des unterlagerten Kommunikationssystems an den Cell-Adaption-Layer.

### Protokollfunktionalität Cell-Net Layer:

Der Cell-Net-Layer beinhaltet folgende Funktionalitäten:
■ Verwaltung von Routinginformationen auf Basis der registrierten Kommunikationspartner - Memberinformation,
■ Verwaltung von Kanalbegriffen - Netzkanäle,
■ Routing der netzkanalbezogenen Nutzdatenstrome zwischen PP-Link-Layer, Cell-Net-Layer und zellulär organisierten Cell-Link-Layern und
■ streckenseitige Kommunikation mit Nachbar Cell-Net-Layern zwecks Übertragung von Cell-Net-Metric Informationen.

### Protokollfunktionalität PP-Link-Layer:

Der PP-Link-Layer beinhaltet folgende Funktionalitäten:
■ Aufbau/Abbau Nutzdatenkanal,
■ Windowing/Flusskontrolle des Nutzdatenkanals,
■ Fehlerkorrektur, zum Beispiel FEC und/oder ARO, bezüglich des Nutzdatenkanals,
■ Segmentierung - Framegenerierung - und Reassemblierung von Nutzdaten,
■ Rücknahmeaufforderung bereits bestätigter Sendeframes - FLUSH - an den Cell-Net-Layer und
■ Bereitstellung der Dienstschnittstelle zur Applikation - Verbindungssteuerung, Datenübertragung, Fehlermeldung.

### Schnittstelle zum unterlagerten Kommunikationssystem:

Die Ausprägung der Schnittstelle zum Kommunikationssystem hängt vom verwendeten Kommunikationssystem ab. Die Schnittstelle weist folgende Eigenschaften auf:
■ verbindungslose Kommunikation,
■ Datenübertragung im Duplex,
■ Broadcastbetrieb, zum Beispiel PMP oder n x PP,
■ Nutzung asynchroner oder synchroner Kommunikationsmedien und
■ zellbezogene Ansteuerung der Kommunikationsmittel des unterlagerten Kommunikationssystems bei Notwendigkeit, zum Beispiel Frequenz bei PLC.

### Schnittstelle zum überlagerten System:

Die Schnittstelle zum überlagerten System ist durch folgende Merkmale gekennzeichnet:
■ PP -Charakteristik,
■ Fehlerkorrektur - QoS -Adaption,
■ priorisiert - servicebezogene Durchsatz / Delay - Optimierung,
■ Adressadaption an unterlagerte Kommunikationsressourcen
■ Multichannel-Verwaltung möglich.
■ Dynamische Bandbreitenadaption ist entsprechend der Situation der unterlagerten Kommunikationsressourcen möglich.
■ Kommunikationsaufbau vom Fahrzeug zur Streckenzentrale oder anderen Fahrzeugen ist möglich.
■ Kommunikationsaufbau von der Streckenzentrale zu Fahrzeugen oder anderen Streckenzentralen ist möglich und
■ Handover von Verbindungen über Zellgrenzen ist möglich.

### Schnittstelle zur lokalen Kommunikationresource:

Für die Kommunikation zwischen den streckenseitigen Protokollinstanzen des MAC-Verfahrens ist eine lokale Kommunikationsressource erforderlich, zum Beispiel für die Kommunikation zwischen Cell-Link-Layern. Die Schnittstellen zwischen den MAC-Protokollschichten werden auf die verwendete Kommunikationsressource abgebildet. Die physikalische Ausprägung dieser lokalen Ressource ist flexibel. An die Kommunikationsressource werden folgende Anforderungen gestellt:
■ vernachlässigbare Durchsatzbeschrankung, das heißt Durchsatz ist sehr hoch im Vergleich zum Durchsatz der verwalteten Kommunikationszellen,
■ vernachlässigbare Delayauswirkungen das heißt die Ressource ist sehr schnell im Vergleich zum Delay der verwalteten Kommunikationszellen,
■ vernachlässigbare Fehlereinstreuung, das heißt fehlerkorrigierte Kommunikationsressource,
■ asynchrone Kommunikation mit lokalem Flusskontrollverständnis und
■ verbindungslose Kommunikation, das heißt eventuell pseudoverbindungslos.

Die Erfindung beschränkt sich nicht auf die vorstehend angegebenen Ausführungsbeispiele. Vielmehr ist eine Anzahl von Varianten denkbar, welche sich bei grundsätzlich anders gearteter Ausführung von den Merkmalen der Erfindung Gebrauch machen.

## Patentansprüche

1. Verfahren zur Datenübertragung zwischen mobilen und ortsfesten Teilnehmern, insbesondere zwischen Schienenfahrzeugen und Streckenzentralen,
**dadurch gekennzeichnet,**
**dass** mittels hierarchisch strukturierter Übertragungsprotokollschichten (Cell-Link-Layer, Cell-Net-Layer und PP-Link-Layer), die in angepasster Ausprägung bei den mobilen und den ortsfesten Teilnehmern eingesetzt werden, sowie einem wählbaren, zellulär aufgebauten und verbindungslosen Kommunikationssystem zur mobilen Datenübertragung, kontinuierliche, verbindungsorientierte und bidirektionale Datenübertragungsdienste zwischen beliebigen mobilen und ortsfesten Teilnehmern innerhalb von Kommunikationsabschnitten oder Zellen und über Zellgrenzen hinweg bereitgestellt werden.

2. Verfahren nach Anspruch 1,
**dadurch gekennzeichnet,**
**dass** die untere Übertragungsprotokollschicht (Cell-Link-Layer) streckenseitig in jedem Kommunikationsabschnitt instanziiert ist, Verbindungen zwischen benachbarten Instanzen aufweist, mit der übergeordneten Protokollschicht (Cell-Net-Layer) verbunden ist und eine belegungsabhängige, asynchrone und individuell adressierte Sende-/Empfangssteuerung für registrierte mobile Tilnehmer durchführt.

3. Verfahren nach Anspruch 2,
**dadurch gekennzeichnet,**
**dass** die Kommunikation und der Zellwechsel durch den Cell-Link-Layer derart gesteuert wird, dass
- das Senden von Nutzdaten zum mobilen Teilnehmer nur in dem Kommunikationsabschnitt erfolgt, in welchem vom mobilen Teilnehmer aktuell Daten empfangen werden,
- die Sendehäufigkeit für Nutzdaten von dem zurückliegenden Übertragungsverhalten (Use-Index) abhangt,
- die bidirektionale Übertragung von Daten zu und von verschiedenen mobilen Teilnehmern in einem Kommunikationsabschnitt sequentiell und asynchron erfolgt
- vom mobilen Teilnehmer nur dann Daten gesendet werden, wenn eine Aufforderung dazu von der ortsfesten Seite erfolgt,
- spezifische Sendeaufforderungen durch den streckenseitigen Cell-Link-Layer in Abhängigkeit von Belegungsinformationen über mobile Teilnehmer und dem zurückliegenden Übertragungsverhalten generiert werden und
- Belegungsinformationen über registrierte mobile Teilnehmer zwischen benachbarten streckenseitigen Cell-Link-Layern innerhalb festgelegter Grenzen (Cell-Link-Umgebung) ausgetauscht werden.

4. Verfahren nach einem der vorangehenden Ansprüche,
**dadurch gekennzeichnet,**
**dass** die mittlere Übertragungsprotokollschicht (Cell-Net-Layer) bei mobilen und ortsfesten Teilnehmern strecken- und fahrzeugseitig mehrfach instanziiert ist, Verbindungen zwischen benachbarten Instanzen aufweist, mit der übergeordneten Übertragungsprotokollschicht (PP-Link-Layer) verbunden ist und je Instanz eine variable Anzahl von untergeordneten Instanzen des Cell-Link-Layers ansteuert.

5. Verfahren nach Anspruch 4,
**dadurch gekennzeichnet,**
**dass** das Routing von Daten zwischen Teilnehmern durch den Cell-Net-Layer derart gesteuert wird, dass
- Informationen über erreichbare Teilnehmer statisch vorgegeben sind,
- Informationen über erreichbare Teilnehmer dynamisch von Instanzen des Cell-Link-Layers an den Cell-Net-Layer gemeldet werden,
- die Informationen über erreichbare Teilnehmer zwischen benachbarten Cell-Net-Layern innerhalb festgelegter Grenzen (Cell-Net-Umgebung) ausgetauscht werden,
- auf der Grundlage von dynamischen Belegungsinformationen von mobilen Teilnehmern die an diese Teilnehmer adressierten Nutzdaten über mehrere Cell-Net-Layer verteilt und zielgerichtet an Instanzen des Cell-Link-Layers weitergegeben werden, in denen die mobilen Teilnehmer aktuell kommunizieren,
- auf der Grundlage von statischen Belegungsinformationen von ortsfesten Teilnehmern die an diese Teilnehmer adressierten Nutzdaten über mehrere Cell-Net-Layer verteilt und zielgerichtet an die übergeordnete Übertragungsprotokollschicht (PP-Link-Layer) übergeben werden und
- die Verteilung und Weitergabe der Daten auch bei Zellwechseln in Abhängigkeit der durch die Cell-Net-Umgebungen begrenzten Belegungsinformationen der Teilnehmer erfolgen.

6. Verfahren nach einem der vorangehenden Ansprüche,
**dadurch gekennzeichnet,**
**dass** die obere Übertragungsprotokollschicht (PP-Link-Layer) beim mobilen und ortsfesten Teilnehmer nach oben mit einem Teilnehmer und nach unten mit einem Cell-Net-Layer verbunden ist und auf Anforderung eines Teilnehmers Ende-zu-Ende Verbindungen zwischen Teilnehmern herstellt, die eine verbindungsorientierte Datenübertragung mit festgelegter Dienstqualität (QoS), welche im Wesentlichen durch Segmentierung, Quittierung, Prioritätensteuerung, Fehlerkorrektur erreicht wird, innerhalb von Zellen und über Zellgrenzen hinweg ermöglichen.

7. Verfahren nach einem der vorangehenden Ansprüche,
**dadurch gekennzeichnet,**
**dass** unterschiedliche zellulär aufgebaute Kommunikationssysteme für die mobile Datenübertragung, wie Mobilfunksysteme, Power-Line-Systeme oder induktive Schleifensysteme, verwendet werden.

8. Verfahren nach einem der vorangehenden Ansprüche,
**dadurch gekennzeichnet,**
**dass** Nutzkanäle in variabler Anzahl zwischen mobilen und ortsfesten Teilnehmern, zwischen ortsfesten Teilnehmern und zwischen mobilen Teilnehmern auf Anforderung beliebiger ortsfester oder mobiler Teilnehmer eingerichtet werden.

9. Verfahren nach einem der vorangehenden Ansprüche,
**dadurch gekennzeichnet,**
**dass** das Übertragungsverhalten durch Anpassung an das verwendete mobile Kommunikationssystem - Cell-Adaption-Layer - an die örtliche Topologie - Nachbarbeziehungen,
an die Größe und Ausdehnung der Zellen,
an die Anzahl und das Verhältnis von Cell-Link-Layern und Cell-Net-Layern,
an die Anzahl der Teilnehmer und benötigten Übertragungskanäle - dynamische Teilnehmerverwaltung, einstellbare Übertragungskapazität -,
an die ortsabhängige Erreichbarkeit von Teilnehmern - Cell-Link-Metric, Cell-Net-Metric - und
an Dienstgüteanforderungen der Applikationen - Durchsatz, Delay, Priorisierung, Segmentierung, Auswahl Übertragungssystem - skaliert wird.

10. Verfahren nach einem der vorangehenden Ansprüche,
**dadurch gekennzeichnet,**
**dass** die Aufnahme der Datenkommunikation von neuen, noch nicht oder nicht mehr registrierten mobilen Teilnehmern mittels einer durch den streckenseitigen Cell-Link-Layer an alle mobilen Teilnehmer gerichteten allgemeinen Sendeaufforderung an jedem Ort, der mit dem Kommunikationssystem ausgerüstet ist, erfolgt.

11. Verfahren nach einem de vorangehenden Ansprüche,
**gekennzeichnet durch**
die Verwendung in Systemen zur Verkehrssteuerung.
